# EUROPEAN PATENT SPECIFICATION

(11) **EP 4 392 325 B1**
(45) Date of publication and mention of the grant of the patent: **04.12.2024**
(21) Application number: 22768462.8
(22) Date of filing: 19.08.2022
(51) Int. Cl.: B63G 8/00

(54) **UNDERWATER DOCKING STATION**
UNTERWASSERANDOCKSTATION
BASE D'ACCUEIL SOUS-MARINE

(30) Priority: 27.08.2021 IT 202100022478
(43) Date of publication of application: 03.07.2024
(73) Proprietor: Heliopolis Holdings Limited, Northwood, Middlesex HA6 1BN (GB)
(72) Inventor: MESHARAFA, Hussein, Giza (EG); EL MARADNY, Abdelrahman, Alexandria (EG)
(74) Representative: PGA S.p.A., Milano, Succursale di Lugano
(86) International application number: PCT/IB2022/020060
(87) International publication number: WO 2023/026100

(56) References cited:
- EP-B1- 2 468 621
- EP-B1- 2 794 393
- US-A1- 2008 302 292
- US-A1- 2021 179 242
- US-B2- 9 944 370

## Description

### Field of the invention

The present disclosure refers to an underwater docking station for cooperating with underwater devices, such as ROVs and AUVs. The underwater docking station is configured to lie on the seabed, optionally in communication with a surface vehicle, such as a boat or a ship, either wired (via a cable connection) or wirelessly.

### Background

Underwater vehicles are used for a wide variety of operations that include - but are not limited to inspection/identification, oceanography, survey missions or samples picking. Underwater vehicles may be manned or unmanned. Among the unmanned vehicles, there are ROVs and AUVs. An Autonomous Underwater Vehicle (AUV) is a robot that travels underwater without requiring input from an operator. AUVs constitute part of a larger group of undersea systems known as unmanned underwater vehicles, a classification that includes the mentioned non-autonomous Remotely Operated underwater Vehicles (ROVs) - controlled and powered from the surface by an operator/pilot via an umbilical or using remote control. ROVs are unmanned underwater vehicles connected to a base station, which may be a ship. As mentioned ROVs are connected to the ship by means of cables; this implies that the maximum achievable distance between the ROV and the base station is limited by the length of the cable. AUVs are unmanned underwater vehicles, which are connected to a docking station by means of a wireless communication. Typically, AUVs are propelled through the energy stored in batteries housed in their body. This means that the operative range of an AUV is limited by the capacity of the battery.

This type of underwater vehicles has recently become an attractive alternative for underwater search and exploration since they are cheaper than manned vehicles. Over the past years, there have been abundant attempts to develop underwater vehicles to meet the challenge of exploration and extraction programs in the oceans. Recently, researchers have focused on the development of AUVs for long-term data collection in oceanography and coastal management. The oil and gas industry uses AUVs to make detailed maps of the seafloor before they start building subsea infrastructure; pipelines and sub-sea completions can be installed in the most cost effective manner with minimum disruption to the environment. The AUV allows survey companies to conduct precise surveys of areas where traditional bathymetric surveys would be less effective or too costly. In addition, post-lay pipe surveys are now possible, which includes pipeline inspection. The use of AUVs for pipeline inspection and inspection of underwater man-made structures is becoming more common.

With the adoption of AUV technology becoming more widespread, the limitations of the technology are being explored and addressed. The average AUV charge lasts about 24-hours on an underwater AUV, but sometimes it is necessary to deploy them for the kinds of several day missions that some unmanned systems are equipped to undertake. Like most robots, the unmanned mechanisms contain batteries that require regular recharging. Docking stations that communicate directly with underwater vehicles, guiding them to where they can recharge and transfer data have been developed. Any data the AUV has gathered, such as images of the seabed, could be uploaded to the docking station and transmitted to home base, which could direct new instructions to the robot.

It is known from WO2018109451 a subsea basket or garage for unmanned underwater vehicles or UUVs, especially autonomous underwater vehicles or AUVs. A basket for hosting an AUV on the seabed comprises a hollow open-topped body. The body surrounds a receptacle into which an AUV that enters the body through the open top can dock for protection, recharging, data download and/or data upload for reprogramming. The open top of the body is closed by a lid movable between a closed and an open position. When the lid is open, an AUV can access the receptacle by moving generally horizontally to under the lid before lowering through the open top of the body and into the receptacle for docking. The lid is then closed onto the body over the docked AUV. The lid is supported and moved by telescopic guideposts driven by actuators that extend vertically from the body to lift the lid into the open position and retract vertically to lower the lid into the closed position. In another embodiment, paired posts may be stowed against opposed sloping sides of the body lying compactly against those sides. When deployed, the posts swing into deployed positions in opposite angular directions about respective pivot axes that are parallel to the respective sides of the body; the posts are part of a lifting frame that further comprises a crossbar in two sections. A respective section of the crossbar is attached to each post such that, when deployed, the sections of the crossbar extend oppositely and orthogonally with respect to the associated posts. Pivots between each post and the attached section of the crossbar allow the sections of the crossbar to collapse compactly against the sloping sides of the body when the posts are stowed away. This prior art does not focus on data exchange between the station and the AUV, but rather defines a complex structure to house and protect the AUV during data exchange and power recharging. However, the proposed structure with several moving parts is complex and may not be really effective. Further, the docking station is designed for very specific and dedicated AUVs.

In addition to the above, any underwater vehicle requiring the need of a wireless communication with the docking station faces at least the problem of the limitations for wireless communications in water. Radio frequencies are significantly attenuated in water. Above some hundreds of KHz, in particular, above 1 MHz, attenuation in water raises significantly and any communication is affected by a link budget loss that limits the communication to some meters or less even with relevant transmission power and antenna gains. In particular, above 1MHz attenuation in seawater raises with a more than linear law from 30dB/m to reach about 60dB/m at frequencies of about 10MHz. Lower frequencies, that lay between the ELF (3-30 Hz) up to the LF (30KHz - 300KHz) band, and that include acoustic and/or ultrasonic frequencies, are significantly less attenuated in water.

Exploiting low frequencies for signal transmission implies significant limitations in bandwidth, which may be so reduced that even the voice may have some problem to be transmitted. In practice, with LF frequencies transmissions can take place at some hundreds of meters, while ELF transmissions can be effectively performed at longer distances.

Underwater wireless communication may be performed by means of an optical communication system. Optical communication is affected by water turbidity, and the performance of an effective communication is affected by the type of modulation used for the optical radiation. In any case, it is known that through the optical communications some tens of meters at most can be reached in seawater. Optical communication, due to the high frequency of the carrier(s), provides high bandwidth that allows providing video streaming and/or high-definition images transmission with low latencies.

The Applicant further notices that an effective control of complex underwater vehicles necessitates a predetermined communication structure. An improved docking station appears necessary to allow AUV data collection efficiently, to permit reliable commands exchange, AUVs recharging and control. Further, an easily configurable docking station is desirable for coupling and interaction with different type of underwater devices.

### Object

The purpose of the present disclosure is to provide an underwater docking station for communication with one or more underwater devices configured to overcome the aforementioned drawbacks.

One aim of the disclosure is to allow flexibility in submarine communication with a variety of different submarine devices that can be configured and housed in or at the docking station.

A further purpose of the invention is to allow rapid configuration between different operating positions of the docking station to not only accommodate and hold an AUV in place, but also to be able to receive, and (e.g., mechanically) couple and communicate with a ROV, and possibly interact with both devices simultaneously.

A further aim is to allow communication with the underwater device(s) over long distances and/or with sufficient bandwidth and to allow data transfer at high speed (e.g., video data transfer), too.

An auxiliary aim is to provide a docking station that may be easily reconfigured for mechanically and/or communicatively coupling with different AUVs and/or ROVs.

### Figures

These and further purposes of the present disclosure are obtained by means of an underwater docking station for communication with one or more underwater devices as here disclosed.

In the subsequent detailed description, a preferred embodiment of the underwater docking station according to the present disclosure will be presented. The detailed description refers to the annexed figures; a brief description thereof is here presented.
Figure 1 shows a front perspective view of an underwater docking station according to the present disclosure in a partially open condition;
Figure 2 shows a rear perspective view of the underwater docking station of the present disclosure;
Figure 3 shows another front perspective view of the underwater docking station according to the present disclosure in a fully open condition;
Figure 4 shows an underwater system including the underwater docking station of figure 3 when ready to receive an underwater device in the form of an AUV;
Figure 5 shows the underwater system of figure 4 further including another underwater device in the form of a ROV coupled to the top portion of the underwater docking station of the present disclosure;
Figure 6 shows a lateral view of the underwater docking station of the present disclosure in the open condition;
Figure 6A shows a lateral view of the underwater docking station of the present disclosure in the closed condition;
Figure 7 shows a front view of the underwater docking station of the present disclosure with inner components in sight;
Figure 8 shows a front view of the underwater docking station of the present disclosure;

### Detailed description

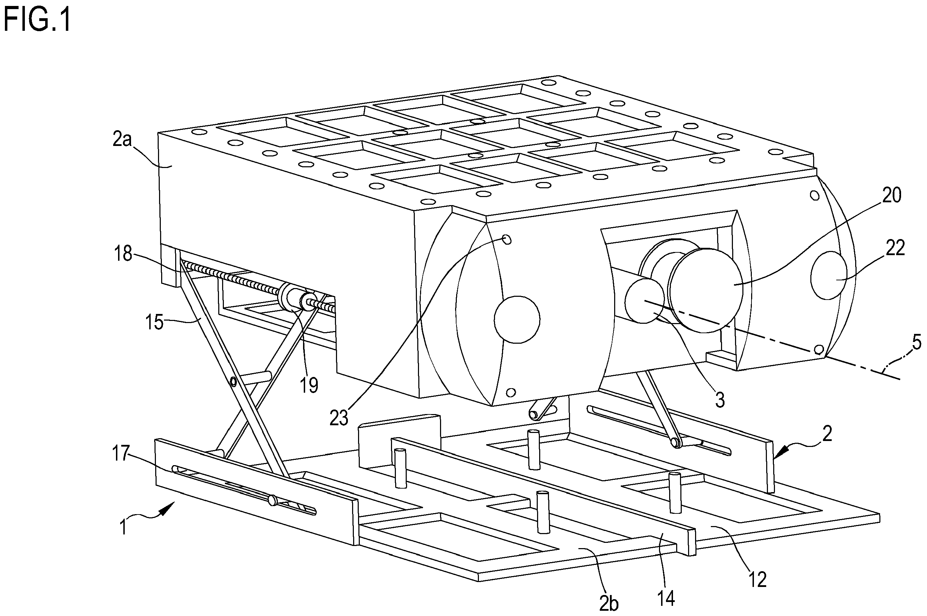

Figure 1 represents an underwater docking station 1 designed for communication with one or more underwater devices 4 (or underwater vehicles such as AUVs and/or ROVs). Though not limiting, the underwater docking station 1 is primarily a seabed underwater docking station, namely a station that, when operative, is positioned and lies on the seafloor. In this regard, the underwater docking station 1 is designed to resist to water pressure and to water salinity and may also operate at great depths such as 6000 metres below sea level.

The underwater docking station 1 comprises a support structure 2 that defines the frame containing the 'operative' elements of the docking station 1 further allowing the station 1 itself to rest on the seabed. The support structure 2 includes a base portion 2a and a top portion 2b interconnected one another.

The portion 2a includes a support plate 12 that is substantially flat for resting on the seabed; the support plate may have any suitable overall dimension, however a length of less than 1m (for example a length of about 825mm) and a width of less than 1m (for example a width of about 625mm) may be recommended to keep the overall volume sufficiently reduced. The support plate 12 may be rectangular with a ratio of sides between 0.5 and 1 (width/length).

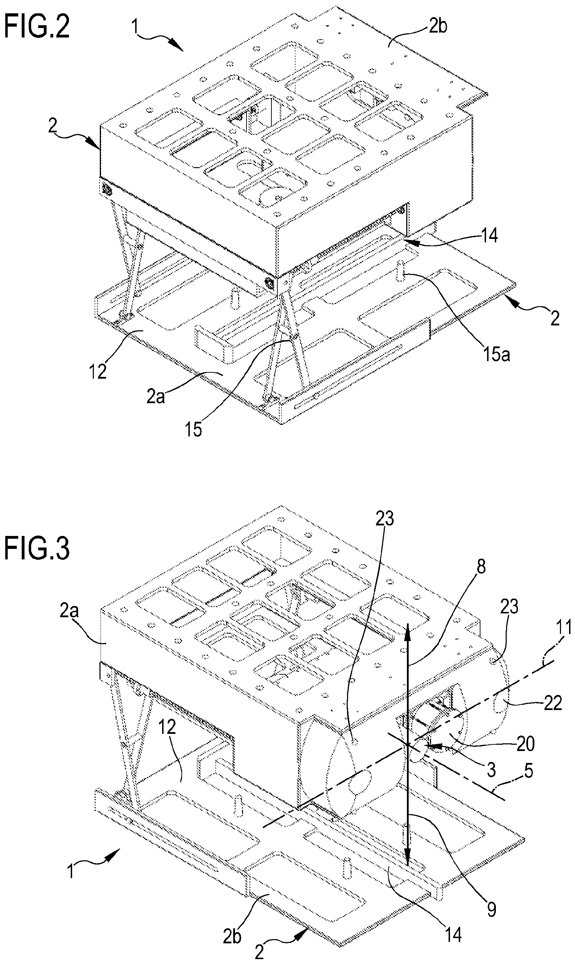

As apparent from the figures (for example figure 3), the support plate 12 has a grid structure showing a plurality of lightening holes of e.g., rectangular form. The holes not only reduce the station weight, but also allow a more stable resting on the seabed since ground irregularities may be compensated.

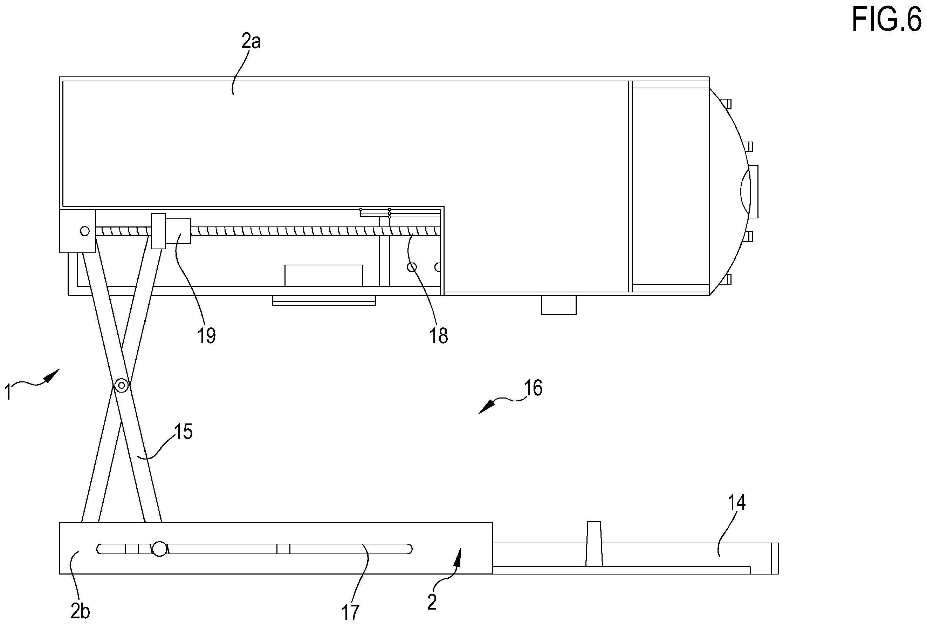

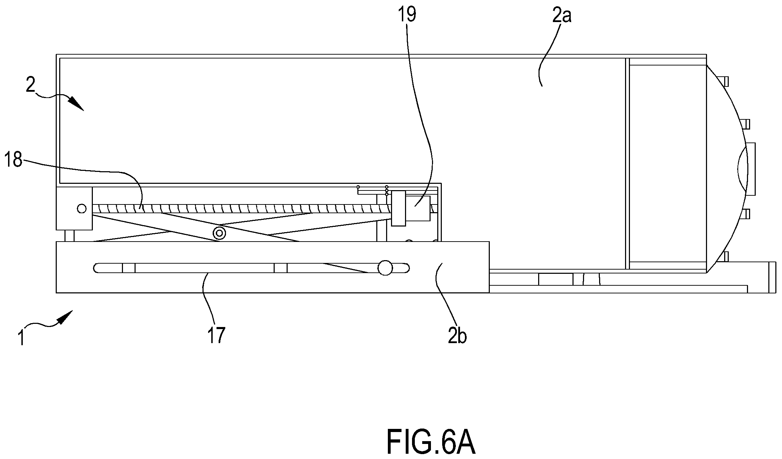

As shown in figures 1 and 6, the support structure 2 comprises a mechanism 15 interposed between the base portion 2a and the top portion 2b to allow moving the base portion 2a away from the top portion 2b defining an housing space 16 for receiving the underwater device 4 between the base portion 2a and the top portion 2b and to allow reducing or removing the housing space 16 defining a compact configuration of the underwater docking station.

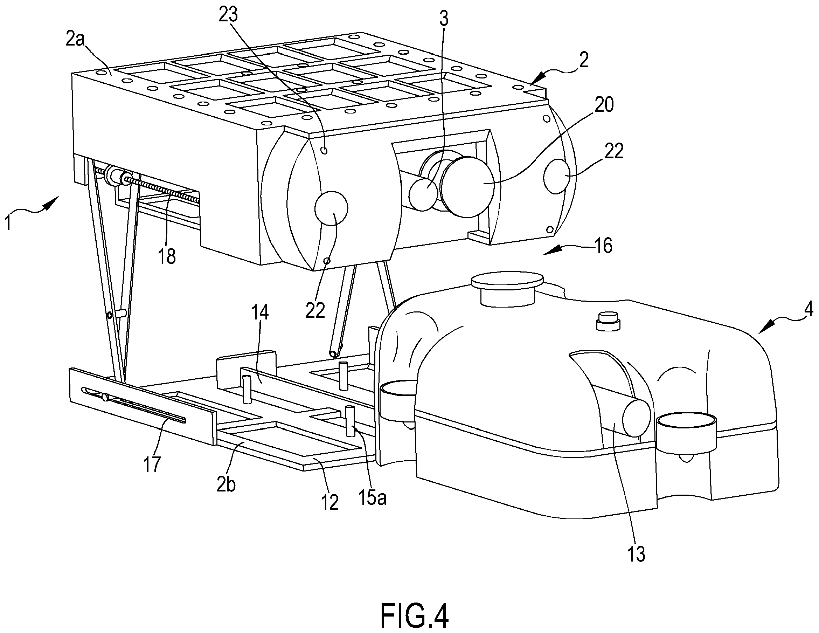

Figure 6 is a lateral view clearly showing the housing space 16 in the extended configuration of the underwater docking station, in which the top portion 2a is far from the base portion 2b. In figure 4, an underwater device 4, such as an AUV, is ready to couple to the docking station by entering into the housing space 16.

Further, the support plate 12 shows a guide 14 in the form of a vertical bar starting from the housing space entrance and heading backwards towards the back of the station; the guide 14 is designed for guiding the underwater device 4 when received by the underwater docking station 1 in the housing space 16 (e.g., avoids that the underwater device 4 hits the scissor mechanism 15 and promotes a correct relative positioning of the underwater device 4 with respect to the docking station, for example for recharging purposes and/or for data exchange as below described in more detail). Obviously, the underwater device 4 has a corresponding seat that receives the emerging guide 14. It is clear that, in an alternative construction, the support plate 12 may include a seat and the underwater device 4 have the emerging guide.

In addition, the support plate 12 shows a locking mechanism 15a, such as one or more projections emerging from the plate 12, for allowing the underwater device 4 to lock to the underwater docking station 1, for example by means of corresponding clamps.

Notably, the support plate 12 may be substituted with a different plate having guide 14 and/or locking mechanism 15a dedicated to a different types/positions of corresponding seat and/or clamps of another underwater device 4.

Going back to the scissor mechanism 15 between the top portion and the base portion, the compact configuration is shown in the lateral view of figure 6A. In this situation, the base portion and the top portion are substantially into contact and no space is defined between them (i.e., no underwater device 4 may be housed between the two portions in the docking station). Figure 6A shows a transport configuration that reduces the overall dimension of the docking station during transportation and/or installation and positioning on the seabed.

In order to automatically switch between the configuration of figure 6 and 6A, the underwater docking station further comprises a reversible actuator active on the mechanism 15 to increase or reduce the housing space 16 by approaching or distancing the base portion 2a and the top portion 2b. In more detail, the mechanism 15 comprises at least two scissor mechanisms, both partially visible in figure 1, that are placed at opposite lateral side with respect to the housing space 16. Each scissor mechanism respectively includes a first bar and a second bar hinged to each other at a respective intermediate point. The first bar has a fixed portion hinged to the base portion 2a and a movable portion slidable along the top portion 2b. The top portion 2b includes a guide 18, in the form of an endless screw and the movable portion of the first bar may slide over the guide 18. In this regard, the reversible actuator comprises a motor and the endless screw 18; the motor rotates the endless screw in one direction or in the opposite direction to achieve increasing or reducing the housing space 16. Indeed, the endless screw is rotatably coupled to the top portion 2a and a threaded head 19 fixed to the movable portion of the first bar of the mechanism 15 is coupled to and moving over the endless screw. When the screw is rotated clockwise, the threaded head 19 is dragged in one direction; when the screw is rotated counter clockwise, the threaded head 19 is dragged in the opposite direction.

Differently, the second bar has a fixed portion hinged to the top portion 2b and a movable portion slidable along the base portion 2a. The base portion 2a includes a sliding seat 17 and a pin of the movable portion of the second bar slides within the sliding seat 17 during movement between the open and the closed positions.

By properly actuating the motor and synchronizing the two scissor mechanism 15, it is possible to configure the underwater docking station between the configuration of figure 6 and of figure 6A (or to achieve any intermediate conditions). When the endless screw is blocked, the scissor mechanism 15 is blocked too and the achieved configuration of the docking station is stable.

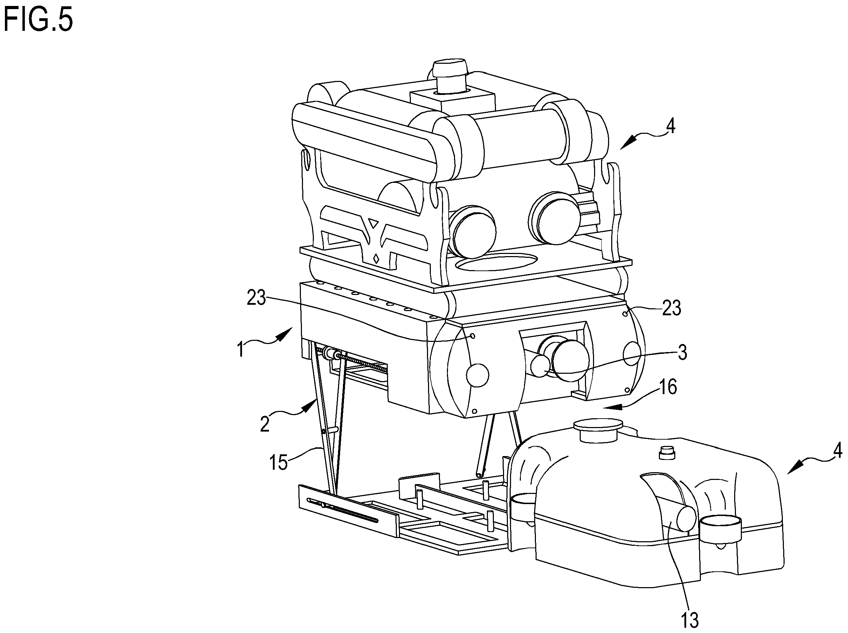

The top portion 2a of the support structure is substantially flat and designed to receive in support another underwater device 4, for example a ROV (see figure 5). Also the top panel of the portion 2a may include lightening holes (e.g. rectangular) to reduce weight and to provide undercuts for the ROV coupling and/or clamping (if necessary). Further, the top portion 2a defines a frame that houses a number of electric and electronic components for the working and communication of the docking station.

The top portion 2a usually houses a battery associated to the support structure 2 to provide electric power to various components here after described such as a control unit 10, an optical communication module 3, an acoustic communication module (hydrophones 23), a camera 20, LEDs 22 and the respective actuators. The battery of the underwater docking station is rechargeable, e.g., wirelessly, through the one or more underwater devices 4 that provides electric power. Indeed, the ROV shown in figure 5 may be electrically powered by the umbilical cable (e.g., from a surface vehicle) and thereby may wirelessly provide electric power to recharge the battery of the docking station without having to recover the same form the bed floor.

Notably, the support structure 2 further houses a wireless recharge module configured to couple to a corresponding wireless recharge module of the underwater device 4 to charge a battery of the underwater device 4. In this regard, electric power recharge is in the reverse direction, namely towards the underwater device 4, which in this case may be an AUV that has no power connection to the surface vehicle. The wireless recharge module is configured to recharge the battery of the underwater device 4 if the corresponding wireless recharge module of the underwater device is at a distance from the wireless recharge module of less than 0,5m, in particular when the underwater device 4 is correctly positioned in the housing space 16 of the support structure 2. The recharge module of the underwater device 4 could be used both to receive electric power from e.g., a ROV, and to provide electric power to e.g., an AUV as mentioned.

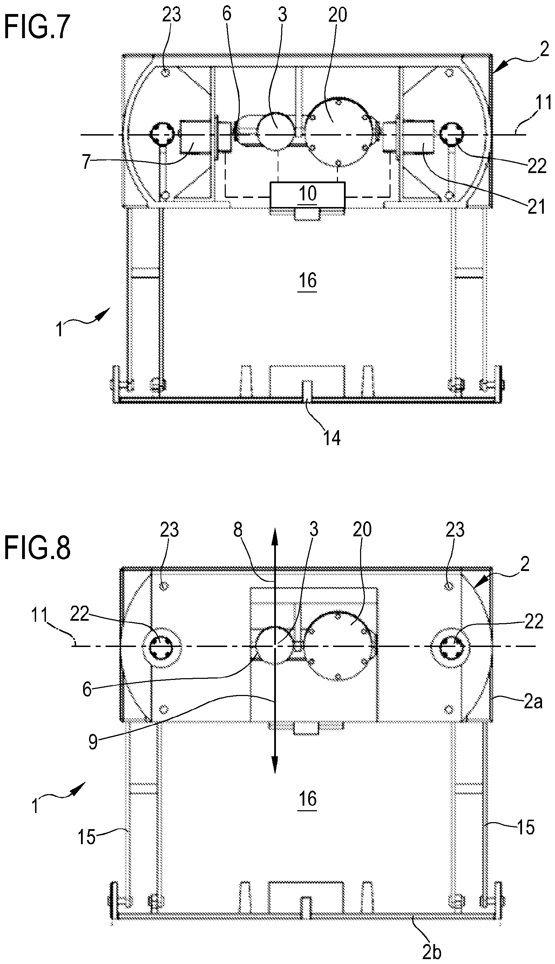

As visible from figures 4 and 8, the docking station 1 further comprises one or more lights, such as LEDs 22, associated to the support structure 2 in correspondence of the front panel of the top portion 2a to allow illuminating the surroundings of the underwater docking station 1. Two LEDs are shown on opposite sides of the front panel to provide (uniform) light to the front of the station in dark subsea environment. A control unit 10 drives the lights/LEDs and is also used to fully control the docking station working.

The top portion 2a also houses a camera 20 placed in correspondence of the front panel. The camera 20 is connected to the control unit 10 and allows viewing and/or filming of images surrounding the underwater docking station; the camera has a certain field of view and the collected data may be stored in a memory connected to the control unit 10. As visible in figure 7, a camera actuator 21 (e.g., a stepper motor) is active on the camera 20 upon control unit command to move the axis of the field of view between different operative positions, wherein the axis of the field of view of the camera 20 is directed along different directions. In other terms, the camera 20 is not fixed to the support structure but may be moved to look at different areas, specifically to the environment in front of the docking station. For example, images may be used to command the underwater device 4 during working or during approach to the docking station for recharge or data exchange. The camera 20 is configured to at least rotate along a rotation axis 11 that is transversal, and in particular orthogonal, to the axis of the field of view of the camera 20. The rotation axis 11 is substantially horizontal in use conditions of the underwater docking station 1 so that the field of view can be moved from framing the seabed towards the surface by pure rotation around the horizontal axis 11. In other terms, the control unit 10 is configured to command the camera actuator 21 exclusively to rotate the camera 20 and move the axis of the field of view of the camera 20 along a vertical plane in use condition of the underwater docking station 1; for example, the control unit 10 may be configured to rotate over a rotation angle range of at least 90° and in particular of at least 180°.

As it is visible from figure 7, the underwater docking station 1 further comprises an optical communication module 3 configured for data communication with one or more underwater devices 4 along an optical communication axis 5. Indeed, the optical communication module 3 is configured to communicate on a line of sight along the communication axis 5 with another optical communication module 1 of the underwater device 4 with its respective communication axis aligned on the line of sight.

The optical communication module 3 comprises a wireless optical modem that in the specific embodiment has a maximum communication range of about 60m. Of course, maximum distance is affected by water turbidity and environment noise. The optical communication module 3 has a data rate of at least 5Mbit/sec, in particular of at least 9/10Mbit/sec and is configured for working at least up to a depth of 6000m. The optical communication module 3 is a bi-directional transceiver and is configured for achieving video data transfer, for example for 4K video data transfer.

In general terms, the optical communication module 3 is used for transmitting and receiving data at high data rate with good bandwidth using optical signals. For the purposes of the present disclosure, with "optical signal" shall be intended a signal within the range of visible light - about in the [380 - 750] nm range - and/or in the range of the infrared light - about in the [700 - 1000] nm range - and/or in the range of the ultraviolet light - about in the range [10 - 380] nm range. The clause "and/or" is provided since in an embodiment the bandwidth of the optical signal may be so broad to cover at least two or three among the ranges of the visible light, the infrared light, the ultraviolet light.

A coupling arrangement 6 is used to mount the optical communication module 3 to the support structure 2 in order to allow a relative movement between the optical communication module 3 and the support structure. The movement is used to properly orient the communication axis 5 and therefore the line of sight of the optical module. An actuator 7 is shown in figure 7 and is active on the optical communication module 3 to move the optical communication axis 5 between (at least) one first operative position and one second operative position, wherein, in the first operative position, the communication axis 5 is directed along a first communication direction 8 and, in the second operative position, the communication axis 5 is directed along a second communication direction 9 that is different from the first communication direction 8. The exemplificative directions are shown in figures 3 and 8. The possibility to move the communication axis is used to allow an easier and more reliable communication between the docking station and the underwater devices 4 according to the position of the specific underwater device 4 with which communication is desired.

As mentioned, an AUV may be housed in the housing space 16 below the top portion 2a (see figure 4). When the AUV is in place below the top portion, the communication axis 5 of the optical communication module 3 is rotated downwards from the position shown in figure 4 so to reach the second communication direction 9. Correspondingly, the optical module 13 (which may be of the same type as above described) included in the AUV is rotated upwards so that the two modules are in sight and may exchange data.

Differently, when a ROV is positioned on top of the support structure 2 as shown in figure 5, the communication axis 5 of the optical communication module 3 is rotated upwards from the position shown in figure 5 so to reach the first communication direction 8. If necessary, a corresponding optical communication module (which may be of the same type as above described) included in the ROV is moved to be in line of sight with module 3 and data are exchanged. Given the fact that more than one underwater device 4 may couple with the docking station in different positions, the optical module mobility allows proper communication with all of the same devices 4 simply changing the communication axis. In this regard, the first communication direction 8 and the second communication direction 9 are directed vertically in use condition of the underwater docking station 1; in the example the first communication direction 8 is directed upwards and the second communication direction 9 is directed downwards.

The control unit 10 is connected to the optical communication module 3 to manage the communication with said one or more underwater devices 4, and to the actuator 7 to drive the optical communication axis 5 (by moving the optical communication module 3 or a portion thereof) to the first operative position or to the second operative position. The optical communication module 3 rotates along a rotation axis 11 that is transversal, in particular orthogonal, to the communication axis 5. As visible form the figures, the rotation axis 11 is substantially horizontal in use conditions of the underwater docking station 1, and therefore the actuator 7 is configured to (exclusively) rotate the optical communication module 3 to move the optical communication axis 5 between the first operative position and the second operative position so that any communication directions lie in a vertical plane. In particular, the control unit 10 is configured to rotate over a rotation angle range of at least 90° and more in detail of at least 180°.

Clearly, the optical communication axis 5 is movable to a plurality of additional positions in addition to the first operative position and the second operative position, and the optical communication module 3 is configured to communicate along additional communication directions in one or more of said additional positions. For example, in the configuration of figure 1, the communication axis 5 is horizontal and any underwater device 4 placed in front of (and in line of sight with) the docking station may communicate in the shown position of the module 3.

Further, to the above optical communication system, the docking station is further provided with an acoustic communication module. Since the optical module 3 allows for good data transfer rate, but requires line of sight and proximity, the applicant has implemented a second communication module that uses acoustic and/or ultrasound signals. This system may communicate at greater distances than the optical system and does not require line of sight. However, the data transfer is much reduced. Therefore, the acoustic module is mainly used for exchanging commands, while the optical for important and large data transfer (e.g., video files). The combination of an optical communication and of a ultrasonic and/or acoustic communication between the base station 1 and the underwater device 4 allows to exchange high-bandwidth data using the optical signal and to obtain long communication distances, even if at a lower bandwidth, using the ultrasonic and/or acoustic signal, in particular without requesting complex and/or delicate transmitters differing from a differently configured or adapted hydrophone. The ultrasonic and/or acoustic communication and the optical communication constitute two distinct logic channels for allowing a communication between the base station and underwater device 4. The fact that the operative connection of the base station 1 with the underwater device 4 takes place through two logic channels of communication operating at frequencies significantly different each other allows to guarantee that some noise sources that may affect one logic channel do not interfere with the other logic channel; in some embodiments those two logic channels may be used simultaneously for redundancy - especially for redundancy of control - thereby achieving an increase of reliability of communication.

For the purposes of the present disclosure, with "ultrasonic signal" shall be intended a signal whose frequency is higher than 20 kHz, preferably comprised in the interval [20 - 200] kHz.

For the purposes of the present disclosure, with "acoustic signal" shall be intended a signal whose frequency is equal or lower than 20 kHz, preferably comprised in the interval [0,01 - 20] kHz, more preferably in the interval [0,02 - 20] kHz.

It is noted that the ultrasonic and/or acoustic signal is so defined since in an embodiment its bandwidth may be located between the frequency range of the ultrasonic signals and the frequency range of the acoustic signals, or the plurality of carriers of the channels of the signal may be located between the frequency range of the ultrasonic signals and the frequency range of the acoustic signals.

The Applicant actually notices that according to IEEE Communications Magazine, January 2009 "Underwater Acoustic Communication Channels: Propagation Models and Statistical Characterization", by Milica Stojanovic, Northeastern University, and James Preisig, Woods Hole Oceanographic Institution, the power spectral density of the ambient noise in an underwater environment, at least due to the wind and shipping activity has a minimum substantially located between 20 kHz and 150 kHz, more in particular between 30 kHz and 110 kHz. Thus, in a preferred, non-limiting, embodiment, the frequency range for the ultrasonic and/or acoustic signal may be located in the [20 - 150] kHz range, preferably in the [30 -110] kHz range.

In this regard, the underwater docking station comprises one or more hydrophones 23 associated to the top portion 2a of the support structure 2 and configured to allow a transmission and reception of ultrasonic and/or acoustic signals. The control unit 10 is connected to the hydrophones 23 to manage communication with ultrasonic and/or acoustic signals. Since the transmission of the ultrasonic and/or acoustic signals is a substantially non-directive transmission, the control unit 10 transmits using the hydrophone 23 when the underwater docking station 1 and the underwater vehicle 4 are at more than a first distance D1 (e.g., between 50m and 500m or more). Since the transmission of optical signals through the optical communication module 3 is a substantially directive transmission, the control unit 10 transmits with the optical communication module 3 when the underwater docking station 1 and the underwater device 4 are at a second distance D2 (e.g., between 0m and 60m). Notably, the first distance D1 is greater than the second distance D2.

In order to properly work, the control unit 10 is configured to receive or determine a distance between the underwater docking station 1 and the underwater device 4, and select a communication using either the hydrophone 23 or the optical communication module 3 based on said calculated or received distance.

Albeit this shall not be considered limiting, in an embodiment the body of the hydrophone 23 is substantially elongated, and defines a main direction of extension that defines substantially a pointing direction or axis of the hydrophone. The hydrophone 23 is specifically configured to operate in a full-duplex communication environment, i.e. wherein simultaneous reception and transmission takes place.

The invention is not limited to the annexed figures. For such reason, the reference numbers provided in the annexed claims are provided for the sole purpose of increasing the intelligibility of the claim, and shall not be construed as limiting.

It is finally clear that several adaptations and additions can be provided to the object of the invention without for this departing from the scope of protection provided by the annexed claims.

## Claims

1. An underwater docking station (1) for communication with one or more underwater devices (4), the underwater docking station comprising:
- a support structure (2) comprising a base portion (2a), a top portion (2b) and in particular a mechanism (15) interposed between the base portion (2a) and the top portion (2b) to allow moving the base portion (2a) away from the top portion (2b) defining an housing space (16) for receiving the underwater device (4) between the base portion (2a) and the top portion (2b) and to allow reducing or removing the housing space (16) defining a compact configuration of the underwater docking station;
- an optical communication module (3) configured for communication with said one or more underwater devices (4) along an optical communication axis (5);
- a coupling arrangement (6) mounting the optical communication module (3) to the support structure (2);
- an actuator (7) active on the optical communication module (3) to move the optical communication axis (5) between at least one first operative position and one second operative position, wherein, in the first operative position, the communication axis (5) is directed along a first communication direction (8) and, in the second operative position, the communication axis (5) is directed along a second communication direction (9) different from the first communication direction (8);
- a control unit (10) connected to:
∘ the optical communication module (3) to manage a communication with said one or more underwater devices (4), and
∘ the actuator (7) to drive the optical communication axis (5) to the first operative position and to the second operative position.

2. The underwater docking station of claim 1, wherein the actuator (7) is active to move the optical communication module (3) or a portion of the optical communication module (3) to rotate the optical communication axis (5) between the first and the second operative position along a rotation axis (11) that is transversal, in particular orthogonal, to the communication axis (5).
wherein the optical communication module (3) is configured to communicate on a line of sight along the communication axis (5) with another optical communication module (13) of one of the one or more underwater devices (4) with respective communication axis aligned on the line of sight,
the coupling arrangement (6) movably mounting the optical communication module (3) to the support structure (2), in particular the actuator (7) being active to the coupling arrangement (6) to move the optical communication axis (5) between the first operative position and the second operative position, in particular the optical communication module (3) being associated to a top portion (2a) of the support structure (2).

3. The underwater docking station of any one of the previous claims, wherein the optical communication axis (5) is movable in a plurality of additional positions in addition to the first operative position and the second operative position, the optical communication module (3) is configured to communicate along additional communication direction in one or more of said additional positions, wherein the additional communication direction lies in a vertical plane in use condition of the underwater docking station (1).

4. The underwater docking station of any one of the previous claims, wherein the first communication direction (8) is directed substantially vertically in use condition of the underwater docking station (1), optionally the second communication direction (9) is directed substantially vertically in use condition of the underwater docking station (1), for example the first communication direction (8) is directed upwards and the second communication direction (9) is directed downwards.

5. The underwater docking station of any one of the previous claims, wherein the optical communication module (3) is a bi-directional transceiver and comprises a wireless optical modem having a data rate of at least 5Mbit/sec, in particular of at least 9/10Mbit/sec.

6. The underwater docking station of any one of the previous claims, wherein the optical communication module (3) has a maximum communication range of about 60m and is configured for working at least up to a depth of 6000m.

7. The underwater docking station of any one of the previous claims, wherein the support structure (2) comprises a base portion (2a) including a support plate (12) configured for supporting the underwater docking station on the seabed, the underwater docking station being a seabed underwater docking station.

8. The underwater docking station of any one of the previous claims, wherein the support structure (2), and in particular the base portion (2a) of the support structure, comprises:
• a guide (14) for guiding the underwater device (4) when received by the underwater docking station (1); and/or
• a locking mechanism (15a), such as a projection, for allowing the underwater device (4) to lock to the underwater docking station (1).

9. The underwater docking station of any one of the previous claims, wherein the underwater docking station further comprises a reversible actuator active on the mechanism (15) to increase or reduce the housing space (16) by approaching or distancing the base portion (2a) and the top portion (2b), wherein the mechanism (15) comprises at least one scissor mechanism including a first bar and a second bar hinged to each other at a respective intermediate point, in particular the first bar has a fixed portion hinged to the base portion (2a) and a movable portion slidable along the top portion (2b) and the second bar has a fixed hinged to the top portion (2b) and a movable portion slidable along the base portion (2a).

10. The underwater docking station of any one of the previous claim, wherein the support structure (2), and in particular the base portion (2a), includes a sliding seat (17), the movable portion of one between the first bar and the second bar sliding within the sliding seat (17),
wherein the support structure (2), and in particular the top portion (2b), includes a guide (18), the movable portion of one between the first bar and the second bar sliding over the guide (18), and
wherein the reversible actuator comprises a motor and a guide (18) in the form of an endless screw, the motor rotating the endless screw in one or the opposite direction to achieve increasing or reducing the housing space (16).

11. The underwater docking station of the previous claim, wherein the endless screw is rotatably coupled to the top portion (2a), a threaded head (19) being fixed to a movable portion of a first bar of the mechanism (15), being coupled to and moving over the endless screw.

12. The underwater docking station of any one of the previous claims, further comprising:
• a camera (20) associated to the support structure (2) to allow viewing and/or filming of images surrounding the underwater docking station in a field of view;
• a camera actuator (21) active on the camera (20) to move an axis of the field of view between different operative positions having the axis of the field of view of the camera (20) directed along different directions, the control unit (10) being connected to:
∘ the camera (20) to manage viewing and/or filming, and
∘ the camera actuator (21) to move the axis of the field of view of the camera (20) between the operative positions;
wherein the camera (20) is configured to at least rotate along a rotation axis (11) that is transversal, in particular orthogonal, to the axis of the field of view of the camera (20).

13. The underwater docking station of the previous claim, wherein the control unit (10) is configured to command the camera actuator (21) exclusively to rotate the camera (20) and move the axis of the field of view of the camera (20) along a vertical plane in use condition of the underwater docking station (1), in particular, the control unit (10) is configured to rotate over a rotation angle range of at least 90° and in particular of at least 180°.

14. The underwater docking station of any one of the previous claims, further comprising a hydrophone (23) configured to allow a transmission and reception of ultrasonic and/or acoustic signals, the control unit (10) being connected to said hydrophone (23) to manage communication with ultrasonic and/or acoustic signals, in particular the hydrophone (23) being associated to a top portion (2a) of the support structure (2).

15. The underwater docking station of the previous claim, wherein the transmission of the ultrasonic and/or acoustic signals is a substantially non-directive transmission, the control unit (10) being configured to transmit with the hydrophone (23) when the underwater docking station (1) and the underwater vehicle (4) are at a first distance (D1), and wherein a transmission of optical signals through the optical communication module (3) is a substantially directive transmission, the control unit (10) being configured to transmit with the optical communication module (3) when the underwater docking station (1) and the underwater vehicle (2) are at a second distance (D2), the first distance (D1) being greater than the second distance (D2), wherein the second distance (D2) is lower than 100m, preferably lower than 80m, preferably lower than 60m, optionally the first distance (D1) being lower than 500m, preferably lower than 300m, preferably lower than 200m, and
wherein the control unit (10) is configured to:
• receive or determine a distance between the underwater docking station (1) and the underwater device (4),
• select a communication using either the hydrophone (23) or the optical communication module (3) based on said distance.

## Patentansprüche

1. Unterwasserandockstation (1) zur Kommunikation mit einer oder mehreren Unterwasservorrichtungen (4), wobei die Unterwasserandockstation aufweist:
- eine Trägerstruktur (2), die einen Basisabschnitt (2a), einen oberen Abschnitt (2b) und insbesondere einen zwischen dem Basisabschnitt (2a) und dem oberen Abschnitt (2b) eingefügten Mechanismus (15) aufweist, um zu erlauben, dass sich der Basisabschnitt (2a) von dem oberen Abschnitt (2b) wegbewegt, wobei ein Aufnahmeraum (16) zum Aufnehmen der Unterwasservorrichtung (4) zwischen dem Basisabschnitt (2a) und dem oberen Abschnitt (2b) definiert wird, und um eine Verkleinerung oder Beseitigung des Aufnahmeraums (16) zu erlauben, wobei eine kompakte Konfiguration der Unterwasserandockstation definiert wird;
- ein optisches Kommunikationsmodul (3), das zur Kommunikation mit der einen oder den mehreren Unterwasservorrichtungen (4) entlang einer optischen Kommunikationsachse (5) konfiguriert ist;
- eine Kupplungsanordnung (6), die das optische Kommunikationsmodul (3) an der Trägerstruktur (2) anbringt;
- einen Aktuator (7), der auf das optische Kommunikationsmodul (3) einwirkt, um die optische Kommunikationsachse (5) zwischen zumindest einer ersten Betriebsposition und einer zweiten Betriebsposition zu bewegen, wobei in der ersten Betriebsposition die Kommunikationsachse (5) entlang einer ersten Kommunikationsrichtung (8) ausgerichtet ist, und in der zweiten Betriebsposition die Kommunikationsachse (5) entlang einer zweiten Kommunikationsrichtung (9), die sich von der ersten Kommunikationsrichtung (8) unterscheidet, ausgerichtet ist;
- eine Steuereinheit (10), welche verbunden ist mit:
∘ dem optischen Kommunikationsmodul (3), zum Verwalten der Kommunikation mit der einen oder den mehreren Unterwasservorrichtungen (4), und
∘ dem Aktuator (7) zum Antreiben der optischen Kommunikationsachse (5) zu der ersten Betriebsposition und zu der zweiten Betriebsposition.

2. Die Unterwasserandockstation von Anspruch 1, wobei der Aktuator (7) aktiviert wird, um das optische Kommunikationsmodul (3) oder einen Abschnitt des optischen Kommunikationsmoduls (3) zu bewegen, um die optische Kommunikationsachse (5) zwischen der ersten und der zweiten Betriebsposition entlang einer Drehachse (11) zu drehen, welche transversal, insbesondere orthogonal, zur Kommunikationsachse (5) ist,
wobei das optische Kommunikationsmodul (3) konfiguriert ist, um auf einer Sichtlinie entlang der Kommunikationsachse (5) mit einem anderen optischen Kommunikationsmodul (13) von einer der einen oder mehreren Unterwasservorrichtungen (4), mit der jeweilige Kommunikationsachse auf die Sichtlinie ausgerichtet, zu kommunizieren,
wobei die Kupplungsanordnung (6) das optische Kommunikationsmodul (3) an der Trägerstruktur (2) bewegbar anbringt, wobei insbesondere der Aktuator (7) die Kupplungsanordnung (6) aktiviert, um die optische Kommunikationsachse (5) zwischen der ersten Betriebsposition und der zweiten Betriebsposition zu bewegen, wobei insbesondere das optische Kommunikationsmodul (3) einem oberen Abschnitt (2a) der Trägerstruktur (2) zugeordnet ist.

3. Die Unterwasserandockstation von einem der vorhergehenden Ansprüche, wobei die optische Kommunikationsachse (5) in mehreren zusätzlichen Positionen, zusätzlich zur ersten Betriebsposition und zweiten Betriebsposition, bewegbar ist, wobei das optische Kommunikationsmodul (3) konfiguriert ist, um entlang einer zusätzlichen Kommunikationsrichtung in mehreren der zusätzlichen Positionen zu kommunizieren, wobei, im Benutzungszustand der Unterwasserandockstation (1), die zusätzliche Kommunikationsrichtung in einer vertikalen Ebene liegt.

4. Die Unterwasserandockstation von einem der vorhergehenden Ansprüche, wobei, im Benutzungszustand der Unterwasserandockstation (1), die erste Kommunikationsrichtung (8) im Wesentlichen vertikal ausgerichtet ist, wobei optional die zweite Kommunikationsrichtung (9) im Benutzungszustand der Unterwasserandockstation (1) im Wesentlichen vertikal ausgerichtet ist, wobei zum Beispiel die erste Kommunikationsrichtung (8) aufwärts ausgerichtet ist und die zweite Kommunikationsrichtung (9) abwärts ausgerichtet ist.

5. Die Unterwasserandockstation von einem der vorhergehenden Ansprüche, wobei das optische Kommunikationsmodul (3) ein bidirektionaler Transceiver ist und ein drahtloses optisches Modem mit einer Datenrate von wenigstens 5 Mbit/s, insbesondere mindestens 9/10 Mbit/s, aufweist.

6. Die Unterwasserandockstation von einem der vorhergehenden Ansprüche, wobei das optische Kommunikationsmodul (3) eine maximale Kommunikationsreichweite von etwa 60 m aufweist und konfiguriert ist, um zumindest bis zu einer Tiefe von 6000 m zu arbeiten.

7. Die Unterwasserandockstation von einem der vorhergehenden Ansprüche, wobei die Trägerstruktur (2) einen Basisabschnitt (2a) aufweist, der eine Trägerplatte (12) enthält, die konfiguriert ist, um die Unterwasserandockstation auf dem Meeresboden zu tragen, wobei die Unterwasserandockstation eine Meeresboden-Unterwasserandockstation ist.

8. Die Unterwasserandockstation von einem der vorhergehenden Ansprüche, wobei die Trägerstruktur (2), insbesondere der Basisabschnitt (2a) der Trägerstruktur, aufweist:
• eine Führung (14) zum Führen der Unterwasservorrichtung (4), wenn sie von der Unterwasserandockstation (1) aufgenommen wird;
und/oder
• einen Sperrmechanismus (15a), wie etwa einen Vorsprung, um ein Sperren der Unterwasservorrichtung (4) an der Unterwasserandockstation (1) zu erlauben.

9. Die Unterwasserandockstation von einem der vorhergehenden Ansprüche, wobei die Unterwasserandockstation ferner einen reversiblen Aktuator aufweist, der auf den Mechanismus (15) einwirkt, um den Aufnahmeraum (16) zu vergrößern oder zu verkleinern, indem sich der Basisabschnitt (2a) und der obere Abschnitt (2b) einander annähern oder voneinander entfernen, wobei der Mechanismus (15) zumindest einen Scherenmechanismus aufweist, der eine erste Stange und eine zweite Stange enthält, die an einem jeweiligen Zwischenpunkt aneinander angelenkt sind, wobei insbesondere die erste Stange einen festen Abschnitt, der an dem Basisabschnitt (2a) angelenkt ist, sowie einen bewegbaren Abschnitt, der entlang dem oberen Abschnitt (2b) verschiebbar ist, aufweist, und die zweite Stange einen festen Abschnitt, der an dem oberen Abschnitt (2b) angelenkt ist, und einen bewegbaren Abschnitt, der entlang dem Basisabschnitt (2a) verschiebbar ist, aufweist.

10. Die Unterwasserandockstation von einem der vorhergehenden Ansprüche, wobei die Trägerstruktur (2), insbesondere der Basisabschnitt (2a), einen Gleitsitz (17) enthält, wobei der bewegbare Abschnitt von einer der ersten Stange und der zweiten Stange in dem Gleitsitz (17) gleitet,
wobei die Trägerstruktur (2), und insbesondere der obere Abschnitt (2b), eine Führung (18) enthält, wobei der bewegbare Abschnitt von einer der ersten Stange und der zweiten Stange über die Führung (18) gleitet, und
wobei der reversible Aktuator einen Motor und eine Führung (18) in Form einer Endlosschraube aufweist, wobei der Motor die Endlosschraube in einer oder der entgegengesetzten Richtung dreht, um den Aufnahmeraum (16) zu vergrößern oder zu verkleinern.

11. Die Unterwasserandockstation vom vorhergehenden Anspruch, wobei die Endlosschraube mit dem oberen Abschnitt (2a) drehbar gekoppelt ist, ein Gewindekopf (19) an einem bewegbaren Abschnitt einer ersten Stange des Mechanismus (15) befestigt ist, wobei er mit der Endlosschraube gekoppelt ist und sich über diese bewegt.

12. Die Unterwasserandockstation von einem der vorhergehenden Ansprüche, die ferner aufweist:
• eine Kamera (20), die der Trägerstruktur (2) zugeordnet ist, um Betrachten und/oder Filmen von Bildern in der Umgebung der Unterwasserandockstation in einem Blickfeld zu erlauben;
• einen Kameraaktuator (21), der auf die Kamera (20) einwirkt, um eine Achse des Blickfeldes zwischen unterschiedlichen Betriebspositionen, mit der Achse des Blickfelds der Kamera (20) entlang unterschiedlicher Richtungen ausgerichtet, zu bewegen, wobei die Steuereinheit (10) verbunden ist mit:
∘ der Kamera (20) zum Verwalten vom Betrachten und/oder Filmen, und
∘ dem Kameraaktuator (21), zum Bewegen der Achse des Blickfelds der Kamera (20) zwischen den Betriebspositionen;
wobei die Kamera (20) konfiguriert ist, um sich zumindest entlang einer Drehachse (11) zu drehen, die transversal, insbesondere orthogonal, zur Achse des Blickfelds der Kamera (20) ist.

13. Die Unterwasserandockstation vom vorhergehenden Anspruch, wobei die Steuereinheit (10) konfiguriert ist, um den Kameraaktuator (21) anzuweisen im Benutzungszustand der Unterwasserandockstation (1), ausschließlich die Kamera (20) zu drehen, und die Achse des Blickfelds der Kamera (20) entlang einer vertikalen Ebene zu bewegen, wobei insbesondere die Steuereinheit(10) konfiguriert ist, um sich über einen Drehwinkelbereich von wenigstens 90° und insbesondere von wenigstens 180° zu drehen.

14. Die Unterwasserandockstation von einem der vorhergehenden Ansprüche, die ferner Hydrophon (23) aufweist, das konfiguriert ist, um Senden und Empfangen von Ultraschall- und/oder akustischen Signalen zu erlauben, wobei die Steuereinheit (10) mit dem Hydrophon (23) verbunden ist, um Kommunikation mit Ultraschall- und/oder akustischen Signalen zu verwalten, wobei insbesondere das Hydrophon (23) einem oberen Abschnitt (2a) der Trägerstruktur (2) zugeordnet ist.

15. Die Unterwasserandockstation vom vorhergehenden Anspruch, wobei das Senden der Ultraschall- und/oder akustischen Signale im Wesentlichen nicht-gerichtetes Senden ist, wobei die Steuereinheit (10) konfiguriert ist, um mit dem Hydrophon (23) zu senden, wenn die Unterwasserandockstation (1) und das Unterwasserfahrzeug (4) einen ersten Abstand (D1) haben, und wobei ein Senden von optischen Signalen durch das optische Kommunikationsmodul (3) ein im Wesentlichen gerichtetes Senden ist, wobei die Steuereinheit (10) konfiguriert ist, um mit dem optischen Kommunikationsmodul (3) zu senden, wenn die Unterwasserandockstation (1) und das Unterwasserfahrzeug (2) einen zweiten Abstand (D2) haben, wobei der erste Abstand (D1) größer als der zweite Abstand (D2) ist, wobei der zweite Abstand (D2) weniger als 100 m beträgt, bevorzugt weniger als 80 m, bevorzugt weniger als 60 m, wobei optional der erste Abstand (D1) weniger als 500 m beträgt, bevorzugt weniger als 300 m, bevorzugt weniger als 200 m, und
wobei die Steuereinheit (10) konfiguriert ist, zum:
• Empfangen oder Bestimmen eines Abstands zwischen der Unterwasserandockstation (1) und der Unterwasservorrichtung (4),
• Auswählen einer Kommunikation mittels entweder des Hydrophons (23) oder des optischen Kommunikationsmoduls (3) basierend auf dem Abstand.

## Revendications

1. Station d'accueil sous-marine (1) pour la communication avec un ou plusieurs dispositifs sous-marins (4), la station d'accueil sous-marine comprenant :
- une structure de support (2) comprenant une portion de base (2a), une portion supérieure (2b) et en particulier un mécanisme (15) interposé entre la portion de base (2a) et la portion supérieure (2b) pour permettre le déplacement de la portion de base (2a) loin de la portion supérieure (2b) définissant un espace de logement (16) pour recevoir le dispositif sous-marin (4) entre la portion de base (2a) et la portion supérieure (2b) et pour permettre de réduire ou de retirer l'espace de logement (16) définissant une configuration compacte de la station d'accueil sous-marine ;
- un module de communication optique (3) configuré pour une communication avec lesdits un ou plusieurs dispositifs sous-marins (4) le long d'un axe de communication optique (5) ;
- un agencement de couplage (6) montant le module de communication optique (3) à la structure de support (2) ;
- un actionneur (7) actif sur le module de communication optique (3) pour déplacer l'axe de communication optique (5) entre au moins une première position fonctionnelle et une seconde position fonctionnelle, dans laquelle, dans la première position fonctionnelle, l'axe de communication (5) est dirigé le long d'un premier sens de communication (8) et, dans la seconde position fonctionnelle, l'axe de communication (5) est dirigé le long d'un second sens de communication (9) différent du premier sens de communication (8) ;
- une unité de commande (10) connectée :
∘ au module de communication optique (3) pour gérer une communication avec lesdits un ou plusieurs dispositifs sous-marins (4), et
∘ à l'actionneur (7) pour conduire l'axe de communication optique (5) vers la première position fonctionnelle et vers la seconde position fonctionnelle.

2. Station d'accueil sous-marine selon la revendication 1, dans laquelle l'actionneur (7) est actif pour déplacer le module de communication optique (3) ou une portion du module de communication optique (3) pour tourner l'axe de communication optique (5) entre la première et la seconde position fonctionnelle le long d'un axe de rotation (11) qui est transversal, en particulier orthogonal, à l'axe de communication (5),
dans laquelle le module de communication optique (3) est configuré pour communiquer sur une ligne de vision le long de l'axe de communication (5) avec un autre module de communication optique (13) de l'un du un ou de plusieurs dispositifs sous-marins (4) avec un axe de communication respectif aligné sur la ligne de vision,
l'agencement de couplage (6) montant de manière mobile le module de communication optique (3) à la structure de support (2), en particulier l'actionneur (7) étant actif pour que l'agencement de couplage (6) déplace l'axe de communication optique (5) entre la première position fonctionnelle et la seconde position fonctionnelle, en particulier le module de communication optique (3) étant associé à une portion supérieure (2a) de la structure de support (2).

3. Station d'accueil sous-marine selon l'une quelconque des revendications précédentes, dans laquelle l'axe de communication optique (5) est mobile selon une pluralité de positions additionnelles en plus de la première position fonctionnelle et de la seconde position fonctionnelle, le module de communication optique (3) étant configuré pour communiquer le long d'un sens de communication additionnel dans l'une ou plusieurs desdites positions additionnelles, dans laquelle le sens de communication additionnel repose dans un plan vertical durant l'état d'utilisation de la station d'accueil sous-marine (1).

4. Station d'accueil sous-marine selon l'une quelconque des revendications précédentes, dans laquelle le premier sens de communication (8) est dirigé sensiblement verticalement durant l'état d'utilisation de la station d'accueil sous-marine (1), éventuellement le second sens de communication (9) est dirigé sensiblement verticalement durant l'état d'utilisation de la station d'accueil sous-marine (1), par exemple le premier sens de communication (8) est dirigé vers le haut et le second sens de communication (9) est dirigé vers le bas.

5. Station d'accueil sous-marine selon l'une quelconque des revendications précédentes, dans laquelle le module de communication optique (3) est un émetteur-récepteur bidirectionnel et comprend un modem optique sans fil ayant un débit de données d'au moins 5 Mbit/s, en particulier d'au moins 9/10 Mbit/s.

6. Station d'accueil sous-marine selon l'une quelconque des revendications précédentes, dans laquelle le module de communication optique (3) présente une plage de communication maximale d'environ 60 m et est configuré pour fonctionner au moins jusqu'à une profondeur de 6 000 m.

7. Station d'accueil sous-marine selon l'une quelconque des revendications précédentes, dans laquelle la structure de support (2) comprend une portion de base (2a) comprenant une plaque de support (12) configurée pour supporter la station d'accueil sous-marine sur le fond marin, la station d'accueil sous-marine étant une station d'accueil sous-marine de fond marin.

8. Station d'accueil sous-marine selon l'une quelconque des revendications précédentes, dans laquelle la structure de support (2), et en particulier la portion de base (2a) de la structure de support, comprend :
• un guide (14) pour guider le dispositif sous-marin (4) lorsqu'il est reçu par la station d'accueil sous-marine (1) ; et/ou
• un mécanisme de verrouillage (15a), tel qu'une projection, pour permettre le verrouillage du dispositif sous-marin (4) à la station d'accueil sous-marine (1).

9. Station d'accueil sous-marine selon l'une quelconque des revendications précédentes, dans laquelle la station d'accueil sous-marine comprend en outre un actionneur réversible actif sur le mécanisme (15) pour accroître ou réduire l'espace de logement (16) en s'approchant ou en s'éloignant de la portion de base (2a) et de la portion supérieure (2b), dans laquelle le mécanisme (15) comprend au moins un mécanisme ciseau comprenant une première barre et une seconde barre articulées l'une par rapport à l'autre au niveau d'un point intermédiaire respectif, en particulier la première barre ayant une portion fixe articulée par rapport à la portion de base (2a) et une portion mobile pouvant coulisser le long de la portion supérieure (2b) et la seconde barre présente une portion fixe articulée par rapport à la portion supérieure (2b) et une portion mobile pouvant coulisser le long de la portion de base (2a).

10. Station d'accueil sous-marine selon l'une quelconque des revendications précédentes, dans laquelle la structure de support (2), et en particulier la portion de base (2a), inclut un siège coulissant (17), la portion mobile de l'une entre la première barre et la seconde barre coulissant à l'intérieur du siège coulissant (17),
dans laquelle la structure de support (2), et en particulier la portion supérieure (2b), inclut un guide (18), la portion mobile de l'une entre la première barre et la seconde barre coulissant sur le guide (18), et
dans laquelle l'actionneur réversible comprend un moteur et un guide (18) sous la forme d'une vis sans fin, le moteur faisant tourner la vis sans fin dans un, ou dans le, sens opposé pour obtenir l'augmentation ou la réduction de l'espace de logement (16).

11. Station d'accueil sous-marine selon la revendication précédente, dans laquelle la vis sans fin est accouplée de manière à pouvoir tourner à la portion supérieure (2a), une tête filetée (19) étant fixée à une portion mobile d'une première barre du mécanisme (15), étant accouplée à, et se déplaçant sur, la vis sans fin.

12. Station d'accueil sous-marine selon l'une quelconque des revendications précédentes, comprenant en outre :
• une caméra (20) associée à la structure de support (2) pour permettre de visualiser et/ou de filmer des images environnant la station d'accueil sous-marine dans un champ de vision ;
• un actionneur de caméra (21) actif sur la caméra (20) pour déplacer un axe du champ de vision entre différentes positions fonctionnelles ayant l'axe du champ de vision de la caméra (20) dirigé le long de différents sens, l'unité de commande (10) étant connectée à :
∘ la caméra (20) pour gérer la visualisation et/ou le tournage, et
∘ à l'actionneur de caméra (21) pour déplacer l'axe du champ de vision de la caméra (20) entre les positions fonctionnelles ;
dans laquelle la caméra (20) est configurée pour au moins tourner le long d'un axe de rotation (11) qui est transversal, en particulier orthogonal, à l'axe du champ de vision de la caméra (20).

13. Station d'accueil sous-marine selon la revendication précédente, dans laquelle l'unité de commande (10) est configurée pour commander l'actionneur de caméra (21) exclusivement pour faire tourner la caméra (20) et déplacer l'axe du champ de vision de la caméra (20) le long d'un plan vertical durant l'état d'utilisation de la station d'accueil sous-marine (1), en particulier, l'unité de commande (10) est configurée pour tourner sur une plage d'angles de rotation d'au moins 90° et en particulier d'au moins 180°.

14. Station d'accueil sous-marine selon l'une quelconque des revendications précédentes, comprenant en outre un hydrophone (23) configuré pour permettre une transmission et une réception de signaux ultrasonores et/ou acoustiques, l'unité de commande (10) étant connectée audit hydrophone (23) pour gérer une communication avec des signaux ultrasonores et/ou acoustiques, en particulier l'hydrophone (23) étant associé à une portion supérieure (2a) de la structure de support (2).

15. Station d'accueil sous-marine selon la revendication précédente, dans laquelle la transmission des signaux ultrasonores et/ou acoustiques est une transmission sensiblement non directive, l'unité de commande (10) étant configurée pour transmettre avec l'hydrophone (23) lorsque la station d'accueil sous-marine (1) et le véhicule sous-marin (4) se trouvent sous une première distance (D1), et dans laquelle une transmission de signaux optiques à travers le module de communication optique (3) est une transmission sensiblement directive, l'unité de commande (10) étant configurée pour transmettre avec le module de communication optique (3) lorsque la station d'accueil sous-marine (1) et le véhicule sous-marin (2) se trouvent sous une seconde distance (D2), la première distance (D1) étant supérieure à la seconde distance (D2), dans laquelle la seconde distance (D2) est inférieure à 100 m, préférablement inférieure à 80 m, préférablement inférieure à 60 m, éventuellement la première distance (D1) étant inférieure à 500 m, préférablement inférieure à 300 m, préférablement inférieure à 200 m, et
dans laquelle l'unité de commande (10) est configurée pour :
• recevoir ou déterminer une distance entre la station d'accueil sous-marine (1) et le dispositif sous-marin (4),
• sélectionner une communication utilisant soit l'hydrophone (23) soit le module de communication optique (3) sur la base de ladite distance.
